# EUROPÄISCHE PATENTSCHRIFT

(11) **EP 1 187 697 B1**
(45) Veröffentlichungstag und Bekanntmachung des Hinweises auf die Patenterteilung: **16.04.2003**
(21) Anmeldenummer: 00922404.9
(22) Anmeldetag: 15.05.2000
(51) Int. Cl.: B23D 63/18

(54) **VERFAHREN ZUR FÜHRUNG EINES ENDLOSEN BANDSÄGEBLATTES**
A DEVICE FOR GUIDING AN ENDLESS BAND-SAW BLADE
PROCEDE POUR LE GUIDAGE D'UNE LAME DE SCIE A RUBAN SANS FIN

(30) Priorität: 18.06.1999 CH 113899
(43) Veröffentlichungstag der Anmeldung: 20.03.2002
(73) Patentinhaber: Iseli & Co. AG Maschinenfabrik, 6247 Schötz (CH)
(72) Erfinder: ISELI, Benno, CH-6247 Schötz (CH)
(74) Vertreter: Patentanwälte Feldmann & Partner AG
(86) Internationale Anmeldenummer: CH0000267
(87) Internationale Veröffentlichungsnummer: WO00078492

(56) Entgegenhaltungen:
- EP-A- 0 820 829
- DE-A- 4 214 784
- DE-C- 3 313 160
- FR-A- 1 237 060
- US-A- 5 488 884
- SOVIET INVENTIONS ILLUSTRATED Section PQ, Week 198106 Derwent Publications Ltd., London, GB; Class P63, AN 1981-B1342D XP002146260 -& SU 738 874 A (MECH WOOOD TREAT), 5. Juni 1980 (1980-06-05)

## Beschreibung

Die vorliegende Erfindung betrifft eine Vorrichtung zur Führung eines endlosen Bandsägeblattes um zwei im Abstand voneinander angeordnete Umlenkstationen, bei denen das Bandsägeblatt jeweils mit gleichbleibendem Radius geführt ist und mindestens einer dazwischen angeordneten, gradlinigen Strecke gemäß Oberbegriff von Patentanspruch 1.

Die Erfindung betrifft in vorteilhafter Weiterbildung auch eine Vorrichtung zur Messung und Einstellung der Spannung eines Bandsägeblattes, bei der die erfindungsgemässe Führung realisiert ist.

Bekanntlich sollen Bandsägeblätter bei ihrer Verwendung möglichst Material zerspanen. Dies bedeutet, dass die Bandsägeblätter in ihrem geraden Streckenverlauf zwischen den beiden Umlenkstationen absolut flach sein sollen. Des weiteren soll ein Bandsägeblatt in den Umlenkstationen möglichst ortsgleich verlaufend geführt sein. Ist das Bandsägeblatt im Führungsbereich der Umlenkstationen nur gekrümmt in Richtung des Verlaufs der Umlenkstationen, d.h. praktisch auf einem Halbkreis verlaufend, so müssten die Walzen, Rollen oder Umlenkräder praktisch zylindrisch sein.

Auf einer zylindrischen Fläche hätte das Bandsägeblatt aber eine ungenügende Führung und würde verlaufen. Entsprechend hat man diese Umlenkrollen, Walzen oder Räder mit leicht bombierten Flächen versehen. Die Bandsägeblätter müssen folglich auf den geraden Strecken vollkommen eben verlaufen, während sie in der Krümmung der Umlenkstation eine bombierte Form aufweisen sollen. Dies wird erreicht, indem man mittels Druckwalzen in den sogenannten Körper des Bandsägeblattes eine Spannung einpresst, die dazu führt, dass das Band im gekrümmten Bereich eine gewölbte Form einnnimmt.

Dieses Einwalzen einer Spannung im Bandsägeblatt ist eine äusserst heikle, und daher mit viel Erfahrung verbundene Tätigkeit. Die richtige Einstellung dieser Vorspannung hat wesentlichen Einfluss auf das problemlose Arbeiten in einem Sägewerk, auf die erzielbare Leistung und vor allem auch auf die Lebensdauer des Bandsägeblattes. Mittels dem Druckwalzen wird aber nicht nur die Spannung im Bandsägeblatt eingestellt, sondern gleichzeitig dessen Form bestimmt. So lassen sich eventuelle vorhandene Unebenheiten mittels dem Druckwalzen korrigieren und ebenso der exakt gerade Verlauf der Rückkante des Bandsägeblattes.

Bis heute ist es üblich, dass der Fachmann, welcher diese Arbeit durchführt, das freie, nicht eingespannte Bandsägeblatt von Hand anhebt und etwa im Kuppenbereich mittels einem Lineal oder mittels einer Schablone die Wölbung des Bandsägeblattes feststellt und markiert, an welcher Stelle eventuelle Korrekturen vorgenommen werden sollen. Dies ist im wesentlichen eine Handarbeit, während anschliessend mittels einer einfachen Maschine mit Druckwalzen die Spannungen in das Bandsägeblatt gepresst werden.

Aus der den nächstkommenden Stand der Technik beschreibenden Europäischen Patentanmeldung EP-A-0'820'829 (Walter Oppliger, Uetendorf) ist eine Vorrichtung bekannt, bei der das Bandsägeblatt nicht nur mittels entsprechenden Druckwalzen vorgespannt werden kann, sondern mit welcher zudem die Vorspannung in einem gekrümmten Verlauf des Bandsägeblattes gemessen werden kann. Bei dieser Vorrichtung wird im Prinzip das handwerkliche Vorgehen nachgebildet. Hierbei wird das Bandsägeblatt bezüglich einer Auflage nach oben geführt und von diesen höheren Bereich in einer freien Kurve wieder auf die Auflage zurückgeführt. Die Messung erfolgt hier im absteigenden Bereich, womit nicht die gewünschte Krümmung direkt gemessen wird, sondern eigentlich die umgekehrte Wölbung. Versuche der Anmelderin haben nun gezeigt, dass diese Messung unzuverlässige Resultate zeitigt. Der Grund hierfür ist der freie, nicht kontrollierte Verlauf des Bandsägeblattes, wobei die noch vorhandenen Restspannungen im Band den Verlauf der Kurve verändert und folglich auch die Wölbung selber mitbeeinflusst.

Auf dem Markt ist ferner eine Vorrichtung erhältlich, zur Messung und Bildung der Spannung in einem Bandsägeblatt ähnlich der erwähnten Vorrichtung nach EP-A-0'820'829. Hier wird die Messung kurz vor dem Übergang in die geradlinige Strecke noch im Bereich des konstanten Radius gemessen. Eine Nachbildung dieser Messstrecke durch den Anmelder zeigte ebenfalls ungenaue und variierende Resultate. Um möglichst gleichbleibende Resultate zu erzielen, muss das Bandsägeblatt in dieser von der Firma Ishida Trading Co. Ltd. vertriebenen Maschine eine genügende Zugspannung aufweisen. Um möglichst gleichbleibende Werte zu erhalten, muss das Bandsägeblatt im Messbereich mittels Niederhalter möglichst gleichbleibend geführt werden. Dies ergibt aber einen Zwang, der direkt mit den gewünschten eingeprägten Spannungen im Widerstreit steht und zu verfälschenden Resultaten führt.

Mittels sehr aufwendiger Versuche, hat der Anmelder schliesslich eine Lösung gefunden, die zu äusserst exakt wiederholbaren Messresultaten führt. Davon ausgehend, dass man weiss, dass das Bandsägeblatt im geradlinigen Streckenverlauf absolut eben sein soll, und im gekrümmten Bereich eine Bombierung aufweisen soll, kann man somit davon ausgehen, dass das Bandsägeblatt im Übergangsbereich praktisch somit auf einer Linie eine sprunghafte Formveränderung vornimmt. Diese sprunghafte Veränderung führt aber zu den unerwünschten Unregelmässigkeiten bei den Messungen. Es war daher die Aufgabe der vorliegenden Erfindung, eine Vorrichtung zu schaffen, mittels der die sprunghafte Spannungsänderung im Bandsägeblatt vermieden werden kann.

Diese Aufgabe löst eine Vorrichtung mit den Merkmalen des Patentanspruches 1.

Die Führung des Bandsägeblattes, gemäss der Erfindung ergab nun die Möglichkeit, eine Vorrichtung zur Messung und Einstellung der Spannung eines Bandsägeblattes zu realisieren, welche derart exakte Messungen zuliess, dass man eine Vorrichtung bauen kann, mittels welcher die Bandsägeblätter nun automatisch korrekt geformt werden können.

In der beiliegenden Zeichnung ist eine Ausführungsform der erfindungsgemässen Sägebandführung in Details dargestellt und die erfindungsgemässen Anwendungen schematisch gezeigt. Es zeigt:
- Figur 1: eine perspektivische Darstellung eines Streckenbereiches, in welchem das Bandsägeblatt mit zunehmendem Radius geführt ist;
- Figur 2: zeigt in vereinfachter Darstellung eine Vorrichtung zum Messen und Spannen eines Bandsägeblattes.
- Figur 3: ist eine rein schematische Darstellung der Erfindung.

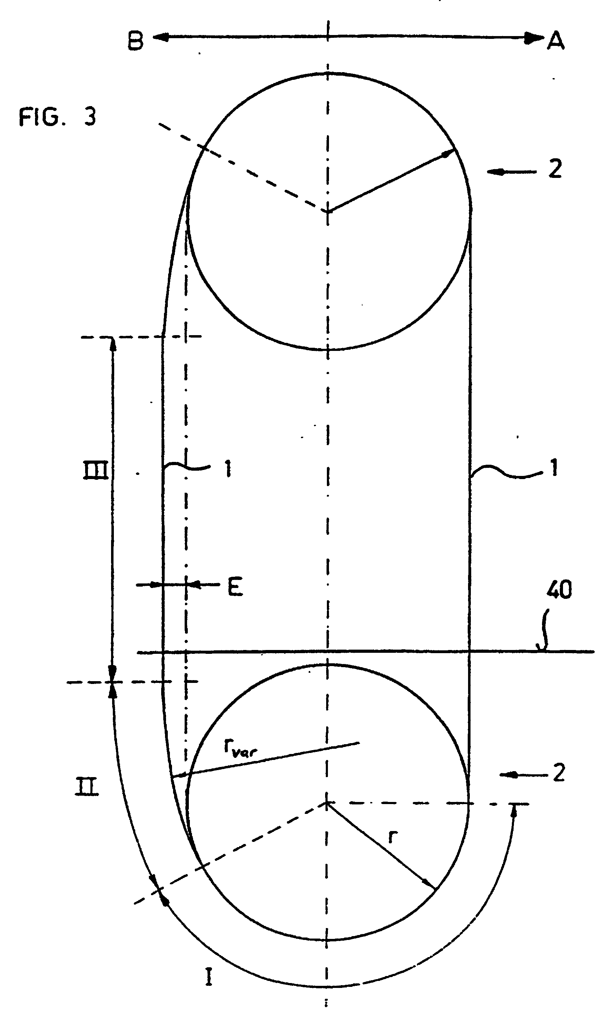

Die Erfindung ist am deutlichsten anhand der Figur 3 zu erläutern. Das Bandsägeblatt selbst ist mit der Bezugszahl 1 bezeichnet. Im Abstand voneinander sind zwei Umlenkstationen 2 dargestellt. Die Umlenkstationen 2 sind hier durch entsprechende Räder gebildet. In einer Vorrichtung zur Messung und Einstellung der Spannung eines Bandsägeblattes, kann die Umlenkstation auch durch eine Vielzahl von Rollen oder Walzen gebildet sein, die auch eine mindestens annähernd kreisförmige Bahn definieren.

In Figur 3, ist die Anordnung so gestaltet, dass man in der rechten Hälfte, auf der Seite A, die konventionelle Führung eines Bandsägeblattes ersieht, während in der linken Bildhälfte B die erfindungsgemässe Führung des Bandsägeblattes dargestellt ist.

In der konventionellen Führung eines Bandsägeblattes läuft dieses bei den Umlenkstationen 2 entlang eines halben Umfanges der Umlenkräder. Im Bereich zwischen den beiden Umlenkstationen 2 verläuft das Bandsägeblatt gerade entlang einer Linie, welche die gemeinsame Tangente an den beiden Umlenkrädern bildet.

Im Gegensatz dazu ist in der linken Bildhälfte die Bandführung verschieden. Hier sind nicht nur zwei verschiedene Bandverlaufsrichtungsabschnitte erkennbar, sondern drei. Der Abschnitt I stellt jenen Bereich dar, in dem das Bandsägeblatt um das Umlenkrad der Umlenkstation 2 verläuft. In diesem Bereich ist der Verlaufskreis bogenförmig, d.h. der Radius in diesem Bereich ist konstant. Diesem Bereich folgt ein zweiter erfindungsgemässer Bereich II, in dem das Bandsägeblatt auf einer Kurve mit kontinuierlich zunehmendem Radius Rᵥₐᵣ verläuft. In diesem Abschnitt verläuft das Bandsägeblatt in der Form eines Klothoidenbogens. Letztlich verbleibt noch ein Abschnitt III, in dem das Bandsägeblatt vollkommen gerade verläuft. In diesem Bereich bildet bei dieser Ausführungsform allerdings die durch diese Strecke III gelegte Gerade nicht die gemeinsame Tangente an den Kurven mit konstantem Radius, bzw. an den beiden Rädern der Umlenkstationen 2, sondern ist dazu parallel versetzt. Diese Distanz der parallelen Versetzung wird oftmals Abrückung genannt und in den meisten mathematischen Formeln mit E bezeichnet. Auf die genaue Ausgestaltung eines Klothoidenbogens braucht in diesem Zusammenhang nicht eingegangen werden, da dies in der mathematischen Literatur ausgiebig behandelt wird und jedermann zur freien Verfügung steht. Entsprechend wird auch von der Herleitung des entsprechenden Integrals abgesehen.

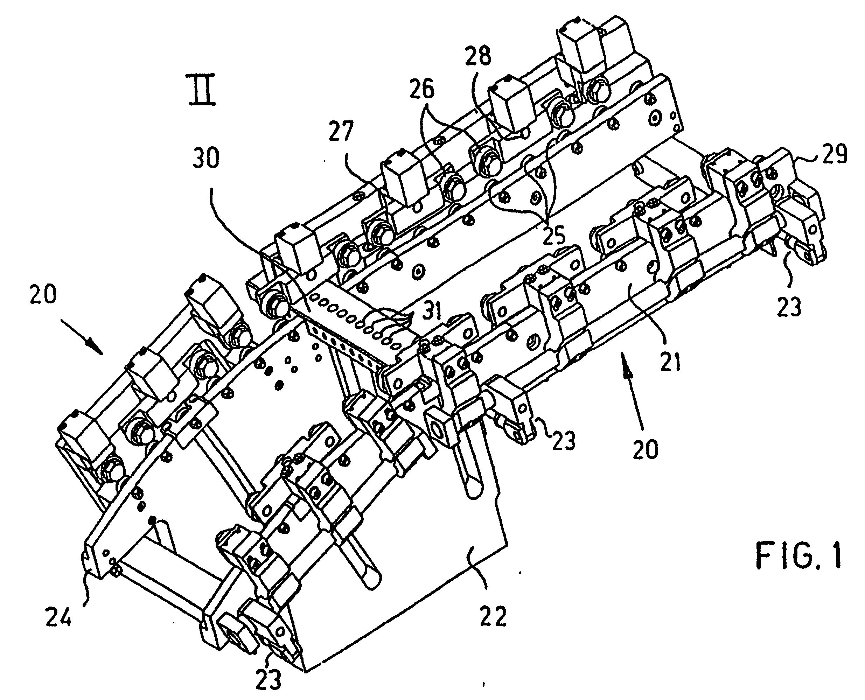

Die eigentliche Ausgestaltung des Klothoidenbogens, bzw. des Bereiches in dem das Bandsägeblatt so geführt wird, dass ein Radius kontinuierlich zunimmt, ist am deutlichsten in der Figur 1 erkennbar. Das Bandsägeblatt selbst ist in dieser Figur der Deutlichkeit halber weggelassen. Der hier gezeigte Bandsägebandführungsabschnitt II ist einem Klothoidenbogen nachgeformt. Er besteht aus zwei parallelen Führungswangen 20, die je aus fertigungstechnischen Gründen in zwei Teilwangenabschnitte 21 und 22 unterteilt sind. Die Distanz beider Teilwangenabschnitte zueinander lässt sich entsprechend der Breite der Bandsägeblätter einstellen. Die entsprechenden Einstellmechanismen sind mit 23 bezeichnet. Im Bereich des ersten Teilwangenabschnittes 21 ist der klothoide Bogen nur mit einer sehr geringen Krümmung versehen. Erst der zweite Teilwangenabschnitt 22 weist eine stärkere Krümmung auf, und am Ende 24 geht die Krümmung der Bahn praktisch in den Radius der Umlenkstation über.

Beidseitig kann das Bandsägeblatt im Bereich beider Wangen einerseits auf Auflagerollen 25 geführt werden und andererseits über Niederhalterollen 26 von oben geführt werden. Um das Bandsägeblatt nicht mit aller Gewalt in eine vorgegebene Form zu zwingen, sind jeweils zwei Niederhalterollen 26 in einem Schwenkschemel 27 gelagert, der um eine Achse 28 eine gewisse Kippbewegung erlaubt. So wird sichergestellt, dass das Bandsägeblatt praktisch ohne grosse Fremdeinwirkung in der Form eines klothoiden Bogens geführt werden kann.

In diesem Bereich wird das Bandsägeblatt kontinuierlich von der bombierten Gestalt übergeführt in die flache Führung. Wo genau zwischen jenem Ende, das am Bereich mit konstantem Radius anschliesst 24, und dem Ende 29, welches an den geraden Streckenbereich anschliesst, das Bandsägeblatt praktisch spannungsfrei ist und folglich die genaueste Information erhältlich ist, kann experimentell genau eruiert werden. Im hier dargestellten Ausführungsbeispiel wird dieser Bereich zwischen den Teilwangenabschnitten 21 und 22 erreicht. Auch wenn der tatsächlich fremdspannungsfreie Bereich kurz davor oder kurz dahinter sein kann, ergibt die Messung ein äusserst zuverlässiges wiederholbares Ergebnis, wie die Versuche gezeigt haben.

Die Messstation 3, mittels der die spannungsbedingte Bombierung des Bandsägeblattes im gekrümmten Verlaufsbereich festgestellt werden kann, ist wie in der Figur 1 ersichtlich durch einen Balken 30 realisiert, der im Übergangsbereich von der Teilwange 21 zur Teilwange 22 angeordnet ist. In diesem Balken 30 sind eine Vielzahl von Messsonden 31 auf einer Linie angeordnet. Bei den Messsonden kann es sich beispielsweise um optische Näherungsmesssonden handeln.

Im Gegensatz zu allen heute auf dem Markt vorhandenen Bandsägerichtmaschinen erlaubt der Messbalken 30 mit einer Vielzahl von Messsonden 31 eine direkte Erfassung des Bandes über die gesamte Breite statt der linearen Erfassung mittels einer einzigen Sonde. Dies ist zeitsparend und erlaubt auch eine schnellere Korrektur an der Stelle, an der dies erforderlich ist.

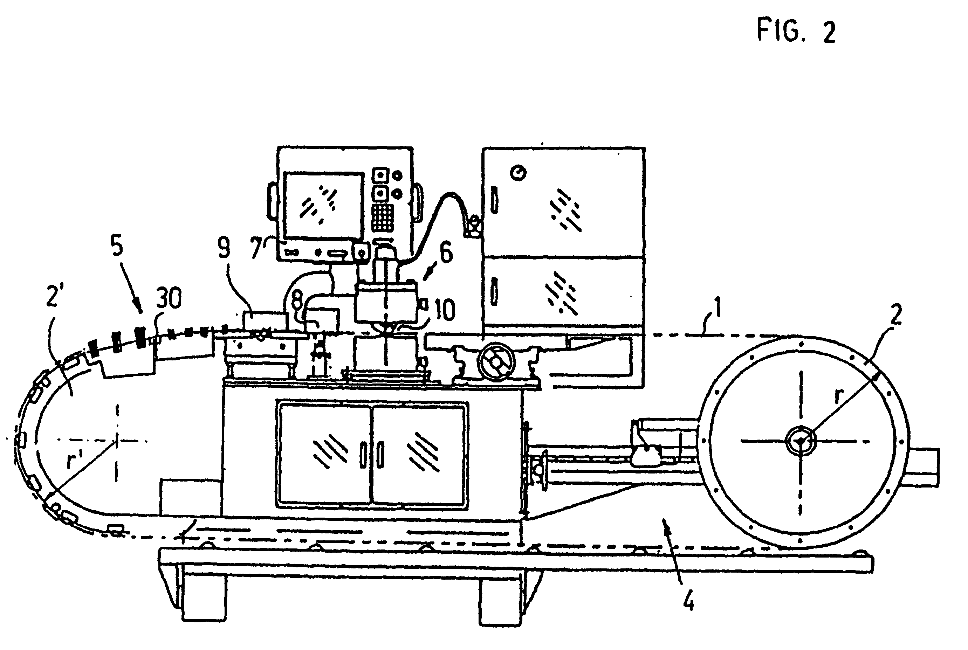

In der Figur 2 ist das Beispiel einer Vorrichtung zur Messung und Einstellung der Spannung eines Bandsägeblattes wie in Anspruch 3 beansprucht dargestellt. Das Bandsägeblatt 1 wird über zwei Umlenkstationen 2 und 2' geführt. Der Durchmesser der Umlenkstation 2' ist hier im Bereich mit konstantem Radius mit einem Radius r' gestaltet, während der Radius der Umlenkstation 2 den Radius r aufweist. Um sich der Länge des Bandsägeblattes 1 anzupassen, ist die Umlenkstation 2 mittels Spannmittel 4 verschieblich angeordnet. Die Umlenkstation 2' hingegen ist fix angeordnet. Die Umlenkstation 2 ist hier als Umlenkrad dargestellt, während die Umlenkstation 2' durch eine Vielzahl von Umlenkrollen gebildet wird.

Der Übergangsbereich 5, welcher in der Figur 1 im Detail dargestellt ist, ist hier vereinfacht gezeichnet. Diesem Übergangsbereich 5 folgt eine Vorrichtung 6, mit druckveränderlichen Druckwalzen 10, deren Anpressdruck in Abhängigkeit der Messung steuerbar ist. Die entsprechenden Steuerbefehle erhält die Vorrichtung 6 vom Rechner 7. An den Rechner 7 werden auch die Messdaten der Messsonden 31 geliefert. Der Rechner erstellt aus den Messpunkten eine Kurve, welche mit einer Sollkurve verglichen wird. Diese Sollkurve, die in den Rechner 7 eingebbar ist, oder in diesem bereits vorhanden und entsprechend abrufbar ist, wird mit den Istverhältnissen verglichen und hieraus ergeben sich die Steuerbefehle für die Vorrichtung 6. Eine Kontrolleinheit 8 dient dazu, die Geradlinigkeit des Bandsägeblattrückens zu messen. Dies kann durch eine mechanische Abtastung oder mittels einer optischen Schranke erfolgen. Auch die Kontrolleinheit 8 liefert die Messdaten an den Rechner 7 und auch diese Messdaten werden ausgewertet und dienen der Steuerung der Vorrichtung 6. Letztlich ist auch noch eine Prüfungseinheit 9 vorhanden, die Abweichungen von der Planheit des Bandsägeblattes feststellt. Diese Planheit, die wiederum über Messsonden oder Abtastrollen ermittelt werden kann, wird an den Rechner 7 weitergeleitet und dient abermals dazu, die Vorrichtung 6 mit den Druckwalzen zu steuern. Die Vorrichtung 6 kann vollständig herkömmlich gestaltet sein. Dies können beispielsweise zwei fluchtend übereinander angeordnete Rollen sein, deren Druck zueinander variierbar ist.

Auch in der gemäss Figur 2 gezeigten Vorrichtung wäre es möglich, den geraden Streckenverlauf gegenüber beiden Umlenkstationen 2 und 2' um die sogenannte Abrückung E versetzt anzuordnen. Im hier dargestellten Beispiel stellt jedoch die Abrückung E die Differenz der Durchmesser der Umlenkstationen 2 und 2' dar. Prinzipiell wäre es jedoch durchaus möglich, an beiden Seiten einen Übergangsbereich 5 zu bilden, um den ebenen Streckenverlauf in den Streckenverlauf mit konstantem Biegeradius umzuleiten. Aus Kostengründen wird man darauf in einer Vorrichtung der hier gezeigten Art jedoch verzichten, weil das Bandsägeblatt 1 hier weder Zugspannungen noch anderen Stresssituationen im grösseren Massstab ausgesetzt ist und auch die Umlaufgeschwindigkeit nur gering ist.

Der Klothoidbogen ist eine relativ komplizierte geometrische Kurve. In der Realität wird man diesen selbstverständlich nur annähern können. Praktisch ist natürlich jeder assymptotisch annähernde Kurvenverlauf von der Kreisform an eine davon distanzierte Gerade denkbar. Die Anwendung von Klothoidbogen ist bis heute insbesondere im Strassen- und Schienenbau bekannt. Durch den klothoiden Bogenverlauf werden die Zentrifugalkräfte beim Übergang vom konstanten Kreisbogen zur Geraden erheblich reduziert.

## Patentansprüche

1. Vorrichtung zur Führung eines endlosen Bandsägeblattes (1) um zwei im Abstand voneinander angeordnete Umlenkstationen (2,2'), bei denen das Bandsägeblatt jeweils mit gleichbleibendem Radius geführt ist, und mindestens einer dazwischen angeordneten geradlinigen Strecke (III), wobei mindestens ein Streckenbereich (II) als Uebergangsbereich von einer Umlenkstation (2,2') mit gleichbleibendem Radius zur geradlinigen Strecke vorhanden ist,
**dadurch gekennzeichnet, dass** das Bandsägeblatt (1) in diesem Übergangsbereich (II) mit zunehmendem Radius (rᵥₐᵣ) mindestens annähernd in der Form eines Klothoidenbogens geführt ist.

2. Vorrichtung nach Anspruch 1 **dadurch gekennzeichnet, dass** zur Messung und Einstellung der Spannung eines Bandsägeblattes die Vorrichtung (6) Druckwalzen (10) aufweist, die in Abhängigkeit der Messung druckveränderlich steuerbar sind und im geradlinigen Streckenverlauf angeordnet sind, wobei die Messung der Spannung mittels einer Messstation (3) erfolgt, die im Bereich angeordnet ist, in dem das Bandsägeblatt in dem Uebergangsbereich (II) mit zunehmendem Radius klothoider Bogenform geführt ist.

3. Vorrichtung nach Anspruch 1, **dadurch gekennzeichnet dass** der Uebergangsbereich (II) mit klothoider Bogenform durch zwei parallele Führungswangen (20), die je in zwei Teilwangenabschnitte (21, 22) unterteilt sind gebildet ist, und dass das Sägeband in diesen Streckenbereich zwischen Auflagerollen (25) und Niederhalterollen (26) die im Schwenkschemeln (27) gelagert sind verläuft.

4. Vorrichtung nach Anspruch 3, **dadurch gekennzeichnet, dass** die Messstation (3) in Verlaufsrichtung mindestens annähernd in der Nähe der Mitte des Uebergangsbereiches (II) mit klothoider Bogenform angeordnet ist.

5. Vorrichtung nach Anspruch 3, **dadurch gekennzeichnet, dass** im geradlinigen Streckenverlauf vor den Druckwalzen (10) eine Kontrolleinheit (8) angeordnet ist, die die Geradlinigkeit des Bandsägeblattrückens misst.

6. Vorrichtung nach Anspruch 3, **dadurch gekennzeichnet, dass** im geradlinigen Streckenverlauf vor den Druckwalzen eine Prüfeinheit (9) ist, die die Planheit des Bandsägeblattes (1) prüft.

7. Vorrichtung nach Anspruch 3, **dadurch gekennzeichnet, dass** die Vorrichtung einen Rechner (7) umfasst, der die Messdaten der Messstation (3) und/oder der Kontrolleinheit (8) und/oder der Prüfeinheit (9) mit Sollwerten vergleicht und dass Steuermittel vorhanden sind, die nach Massgabe des Rechners die Druckwalzen (10) steuern.

8. Vorrichtung nach Anspruch 3, **dadurch gekennzeichnet, dass** die Distanz zwischen den Umlenkstationen (2,2') mittels Spannmittel (4) veränderbar ist.

9. Vorrichtung nach Anspruch 3, **dadurch gekennzeichnet, dass** die Messstation (3) einen quer zur Längsverlaufsrichtung angeordneten Balken (30) umfasst, in dem mehrere auf einer Linie angeordnete Näherungsmesssonden angeordnet sind, mittels derer die vorhandene Bombierung des Bandsägeblattes (1) quer zu seiner Längsrichtung messbar ist.

10. Vorrichtung nach Anspruch 7 und 9, **dadurch gekennzeichnet, dass** dem Rechner (7) ein Sollbombierungsbereich eingebbar ist.

## Claims

1. A device for guiding an endless band-saw blade (1) around two deviation stations (2, 2') arranged at a distance from one another, with which the band-saw blade in each case is guided with a constant radius, and at least one straight-lined path (III) arranged therebetween, wherein there is present at least one path region (II) from a deviation station (2, 2') with a constant radius up to the straight-lined path, forming a transition region,
**characterised in that** the band-saw blade (1) in this transition region (II) is guided with an increasing radius (rᵥₐᵣ) at least appproximately in the shape of a clothoid arc.

2. A device according to claim 1 **characterized in that** for measuring and setting the tension of a band-saw blade the device (6) comprises pressure rollers (10) which depending of the measurement are controllable with respect to change in pressure and are arranged in the straight-lined path course, wherein the measurement of the stress is effected by way of a measuring station (3) which is arranged in the region in which the band-saw blade in the transition region (II) is guided with an increasing radius of a clothoid arc.

3. A device according to claim 1, **characterised in that** the transition region (II) with a clothoid arc shape is formed by two parallel guide cheeks (20), which in each case are subdivided into two part cheek sections (21, 22) and that the saw blade in this path region runs between the contact rollers (25) and holding-down rollers (26) which are mounted in pivoting carriages (27).

4. A device according to claim 3, **characterised in that** the measuring station (3) in the running direction is arranged at least approximately in the vicinity of the middle of the transition region (II) with a clothoid arc shape.

5. A device according to claim 3, **characterised in that** in the straight-lined path course in front of the pressure rollers (10) there is arranged a control unit (8) which measures the linearity of the back of the band-saw blade.

6. A device according to claim 3, **characterised in that** in the straight-lined path course in front of the pressure rollers there is a testing unit (9) which tests the planarity of the band-saw blade (1).

7. A device according to claim 3, **characterised in that** the device comprises a computer (7) which compares the measuring data of the measuring station (3) and/or the control unit (8) and/or the testing unit (9) with nominal values and that there are present control means which control the pressure rollers (10) in accordance with the computer.

8. A device according to claim 3, **characterised in that** the distance between the deviation stations (2, 2') are changeable by way of tension means (4).

9. A device according to claim 3, **characterised in that** the measuring station (3) comprises a beam (30) arranged transversely to the longitudinal running direction, in which several proximity measuring probes are arranged in a line, by way of which the present cambering of the band-saw blade (1) is measurable transversely to its longitudinal direction.

10. A device according to claim 7 and 9, **characterised in that** a nominal cambering region may be inputted to the computer (7).

## Revendications

1. Dispositif pour le guidage d'une lame de scie à ruban sans fin (1) autour de deux stations de déviation (2, 2') disposées à distance l'une de l'autre, par chacune desquelles la lame de scie à ruban est guidée dans un rayon constant, et au moins une trajectoire (III) en ligne droite disposée entre les deux, moyennant quoi au moins une zone de trajectoire (II) existe comme zone de transition d'une station de déviation (2, 2') avec un rayon constant vers la trajectoire en ligne droite,
**caractérisé en ce que** la lame de scie à ruban (1) est guidée dans cette zone de transition (II) avec un rayon croissant (rᵥₐᵣ) au moins approximativement sous la forme d'un arc de clothoïde.

2. Dispositif selon la revendication 1, **caractérisé en ce que** pour la mesure et le réglage de la tension d'une lame de scie à ruban, le dispositif (6) présente des rouleaux presseurs (10) qui peuvent être commandés par modification de pression en relation étroite avec la mesure, et sont disposés dans le parcours de la trajectoire en ligne droite, la mesure de la tension ayant lieu au moyen d'une station de mesure (3) qui est disposée dans la zone dans laquelle la lame de scie à ruban est guidée dans la zone de transition (II) avec le rayon croissant de la forme d'arc de clothoïde.

3. Dispositif selon la revendication 1, **caractérisé en ce que** la zone de transition (II) en forme d'arc de clothoïde est formée par deux montants de guidage parallèles (20) qui sont divisés chacun en deux sections partielles de montant (21, 22), et **en ce que** le ruban de scie passe dans cette zone de la trajectoire entre des rouleaux d'appui (25) et des rouleaux presseurs (26) qui sont installés dans le chariot pivotant (27).

4. Dispositif selon la revendication 3, **caractérisé en ce que** la station de mesure (3) est disposée dans le sens du parcours au moins approximativement dans le voisinage du milieu de la zone de transition (II) en forme d'arc de clothoïde.

5. Dispositif selon la revendication 3, **caractérisé en ce que** dans le parcours de la trajectoire en ligne droite, une unité de contrôle (8) qui mesure l'état de ligne droite du dos de la lame de scie à ruban est disposée devant les rouleaux presseurs (10).

6. Dispositif selon la revendication 3, **caractérisé en ce que** dans le parcours de la trajectoire en ligne droite, une unité de vérification (9) qui vérifie l'état plan de la lame de scie à ruban (1) est disposée devant les rouleaux presseurs.

7. Dispositif selon la revendication 3, **caractérisé en ce que** le dispositif comprend un ordinateur (7) qui compare les données de mesure de la station de mesure (3) et/ou de l'unité de contrôle (8) et/ou de l'unité de vérification (9) avec des mesures de référence, et **en ce que** sont prévus des moyens de commande qui commandent les rouleaux presseurs (10) conformément à l'unité de traitement.

8. Dispositif selon la revendication 3, **caractérisé en ce que** la distance entre les stations de déviation (2, 2') peut être modifiée à l'aide de moyens d'un moyen de tension (4).

9. Dispositif selon la revendication 3, **caractérisé en ce que** la station de mesure (3) comprend une poutre (30) disposée en travers du sens longitudinal de la trajectoire, dans laquelle sont disposées plusieurs têtes de mesure de proximité disposées en ligne, au moyen desquelles le bombage existant de la lame de scie à ruban (1) peut être mesuré en travers de son sens longitudinal.

10. Dispositif selon les revendications 7 et 9, **caractérisé en ce qu'**on peut entrer dans l'ordinateur (7) une zone de bombage de référence.
